# EUROPEAN PATENT APPLICATION

(11) **EP 0 591 709 A2**
(43) Date of publication of application: **13.04.1994**
(21) Application number: 93114659.1
(22) Date of filing: 13.09.1993
(51) Int. Cl.: G06F 9/44, G06F 9/46

(54) **Method and system for controlling the access to the objects in a hierarchical structured object oriented system**

(30) Priority: 25.09.1992 IT MI922214
(71) Applicant: International Business Machines Corporation, Armonk, N.Y. 10504 (US)
(72) Inventor: Massimo, Messina, I-00198 Roma (IT)
(74) Representative: Burt, Roger James, Dr.

(57) **Abstract**

A method and system for controlling the access to the objects in an object oriented data processing application, with said objects being hierarchically structured and either locally available or retrievable from an external unit.

A dependent object counter holds in each object the existence or the number of dependent objects associated to said object; if at least one dependent object is non-locally available, a dummy object is appended to said object, enabling the object expansion even if the dependent objects of the selected object are not yet locally available in memory.

When the user selects an object, the dummy object is replaced by one or more symbols indicating the non-locally availability of the dependent objects.

The objects to be retrieved from the external unit are locked, while access is allowed to the locally available dependent objects.

## Description

The present invention relates in general to object oriented data processing applications and in particular to a method and system for controlling the access to such objects in this applications.

Still more particularly, the present invention relates to a method and system for increasing the throughput during the access to the objects in such applications where said objects are hierarchically structured and each of said objects may be both available locally and retrievable from an external unit.

Object oriented data processing applications are known in the art. Such objects can be arranged according to a predefined hierarchy.

Some applications, particularly those running cooperatively, typically process both locally available objects and objects that must be retrieved from an external unit, for instance a remote computer system.

Whenever an open/expand command for a selected object is issued, if the selected object has some dependent objects defined in association thereto, said selected object is expanded into its dependent objects.

If all the dependent objects of the selected object are already locally present, they are made available; on the contrary, the whole application is locked until all the objects requested by the application are retrieved from the external unit.

The user is kept informed about the process through message windows or status line information.

There are some drawbacks with this prior art.

Every object must have at least one dependent object locally defined in association thereto before it accepts open/expand commands; so, if none of the dependent objects is already retrieved from the external unit, the selected object can not be opened.

Further, it is very hard to understand by the user which objects are locally available or which of them have to be retrieved from the external unit.

Further, the whole application is locked until the retrieve operation of the dependent objects from the external unit is completed; for instance, in a typical window oriented application, the whole process controlling the window is put in a locked status.

It is therefore an object of the present invention to overcome the above drawbacks of the prior art.

According to the present invention we provide a method and system for controlling the access to objects in an object oriented data processing application, capable of exchanging data with an external unit, said objects being hierarchically structured and each one of said objects being either locally available or retrievable from an external unit, said method and system comprising the steps of or means for:
associating to each object a counter indicating whether there are objects dependent on said object,
associating a dummy dependent object to each locally available object with at least one dependent object and with at least one non-locally available dependent object,
selecting an object,
making available for each command involving any object dependent on a selected object the locally available objects dependent on said object and locking the access to the objects dependent on said object which are to be retrieved from the external unit,
unlocking the access to a object dependent on said selected object when all information related to said dependent object has been retrieved from the external unit.

The foregoing and other objects, features, and advantages of the present invention will be apparent from the following more particular description of an embodiment of the invention, given as a non-restrictive example, as illustrated in the accompanying drawings, where:
Figure 1 is a pictorial representation of a data processing system which may be utilized for the implementation of the method and system of the present invention.
Figure 2 shows the object structure in the data processing system according to the present invention.
Figure 3 and 4 are high level logic flow charts illustrating a software implementation of the method and system of the present invention.
Figure 5 is a pictorial representation of the content of the data processing system display (13) at the start state.
Figure 6 is a pictorial representation of the content of the data processing system display (13) at an intermediate state.
Figure 7 is a pictorial representation of the content of the data processing system display (13) at the end state.

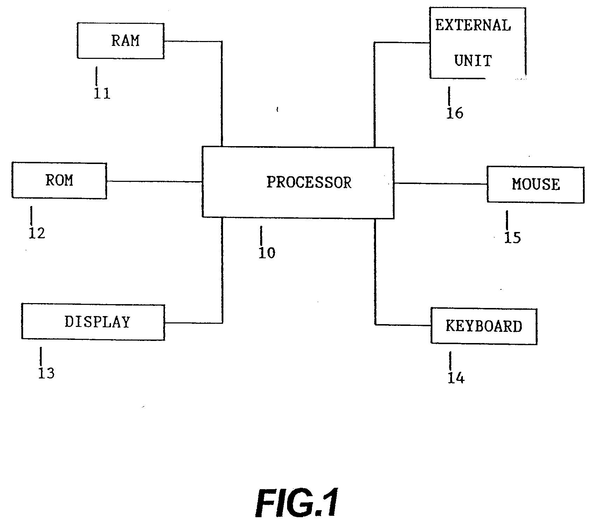

With reference now to the figures and in particular with reference to Figure 1, there is depicted a pictorial representation of data processing system which may be utilized for the implementation of the method and system of the present invention.

It includes a processor (10), a Random Access Memory or RAM (11), a Read Only Memory or ROM (12), a display monitor (13), a keyboard (14); a pointing device, such as a mouse (15), may be attached to the processor (10) as well.

One or more external units (16) are connected to the processor (10); they consist of both remote units, such as a host computer linked by network, Local Area Network (LAN) servers, and I/O devices, such as a local hard disk.

The processor (10) may be a microprocessor such as is found in the IBM Personal System PS/2. Data currently being processed are stored in the RAM (11).

Into the described embodiment, the objects handled by the present inventions may be either locally available in the RAM (11) or to be required from an external unit (16). For instance, they may be stored in remote units, such as a host computer linked by network, in Local Area Network (LAN) servers, or in I/O devices, such as a local hard disk.

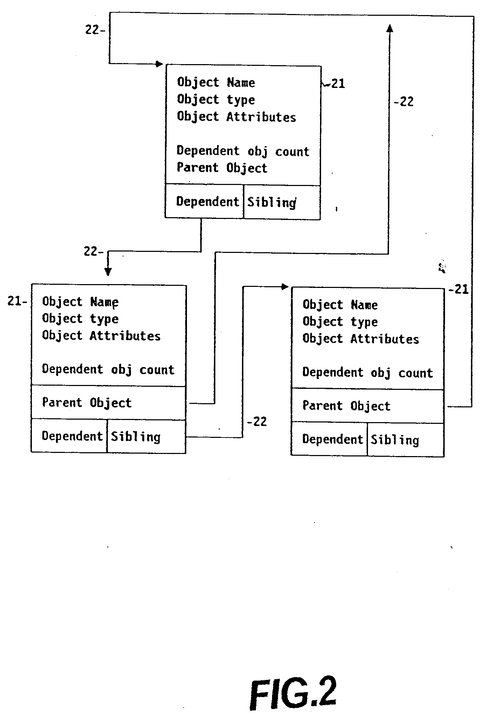

Figure 2 shows the representation in RAM (11) of the object structure in the data processing system according to the described embodiment of the present invention.

The objects are stored in a tree-like structure, where the different objects are represented by control blocks (21) in RAM (11) linked by pointers (22), to the parent objects, to the dependent objects and to the sibling objects.

The dependent object counter holds in each object the numbers of dependent objects associated to said object. This counter may also be a simple flag indicating the existence of at least one dependent object associated to said object.

In the described embodiment, the objects are retrieved from the external unit (16) a set a time, each set including the objects of a given hierarchical level; at each request, said external unit (16) sends back the next level objects in the hierarchy without giving the possibly existing dependent objects of the level itself.

Any object contains the information about the existence of dependent objects associated thereto. This information is held in said dependent object counter and it must be included in any response of the retrieve process from the external unit (16).

If the dependent object counter is zero, meaning no dependent objects exist, the open function for this object is disabled.

Through this count, the program may determine if any locally available object has a dependent object. If so, the program appends to said object a dummy dependent object if at least one related dependent object is non-locally available.

The dummy object is not visible and it is always transformed in a different object type when the actual data is retrieved.

The dummy object is used mainly to indicate to the program controlling the graphical representation of the objects that said object has at least one dependent object.

Therefore, this dummy object enables the object expansion even if the dependent objects of the selected object are not yet locally available in the RAM (11).

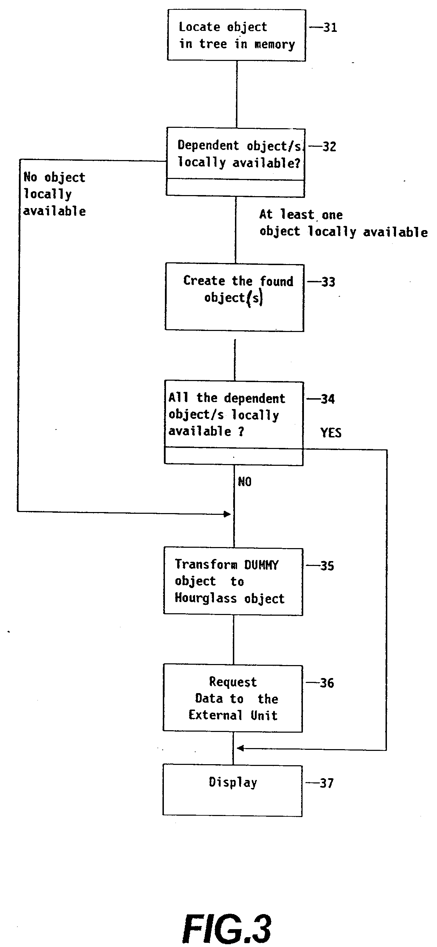

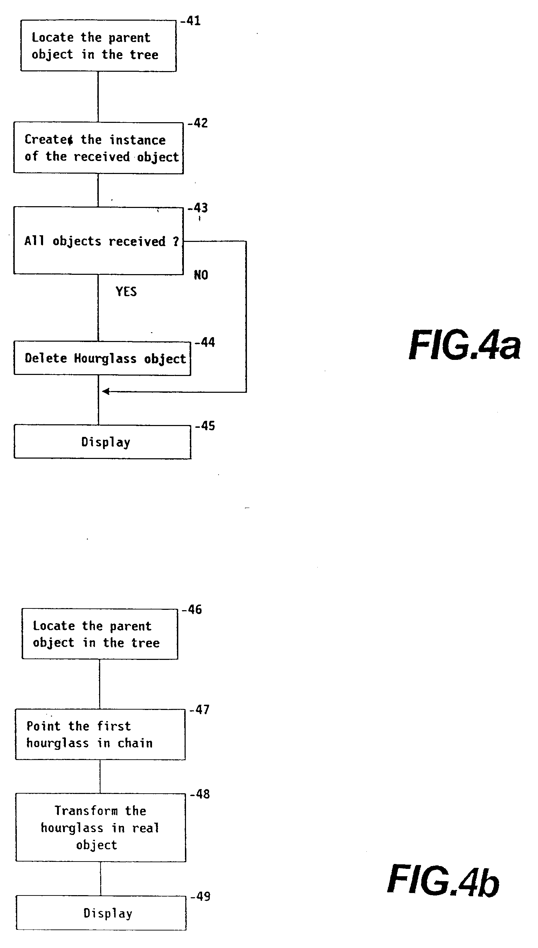

The whole process will be described now with reference to Figures 3 and 4, through high level logic flow charts illustrating a software implementation of the method and system of the present invention.

Assuming that we already have an object in RAM (11), when the user selects an object by clicking its open button with the mouse (15), the program sends to this object a message that starts the method illustrated in figure 3.

At block 31 the program determines the address of the selected object in the tree in RAM (11).

Block 32 depicts a determination of whether or not there is at least one locally available object dependent on the selected object.

If no object is locally available, the process passes to block 35. If at least one object is locally available, the process passes at block 33, where the program creates an instance of all the locally available objects dependent on the selected object.

Referring now to block 34, the process depicts a determination of whether or not all the objects dependent on the selected object are locally available.

If the answer is YES, the process passes to block 37 and shows all the objects on the display (13).

If the answer is NO, the process passes to block 35, where the dummy object appended to the selected object is transformed in an object indicating the non availability of the objects dependent on the selected object, such as a hourglass. This hourglass object has no function available; hence, the access to this hourglass object is locked.

If the dependent object counter indicates the number of objects dependent on said object, it is also possible to substitute the dummy object with as many hourglasses as the number of dependent objects that are still to be retrieved from the external unit (16).

The process passes now to block 36, where a specific request is built and it is sent to a component managing the communication with the external unit (16); the address of the memory representation of the selected object is passed as a parameter in the request to said component.

Referring now to block 37, all the objects are shown on the display (13).

Through the hourglass or hourglasses, the user may be advised that the process of retrieving said dependent objects from the external unit (16) is still in progress.

The user can operate on the other objects already present locally, without waiting for the reception of all data.

When the component managing the communication with the external unit (16) notifies that one of the requested objects is arrived, this component sends a message to the application that starts one of the methods illustrated in figures 4a and 4b.

Figure 4a depicts the case where there is only a hourglass for all the not locally available dependent objects; the figure 4b depicts the case where there are one hourglass for each not locally available dependent objects.

Referring now to figure 4a, at step 41 the address of the memory representation of the selected object in the tree is passed back, and the program determines the address of said object in the tree in RAM (11).

The process passes to block 42, where the program creates an instance of the retrieved dependent object.

Referring now to block 43, the process depicts a determination of whether or not all the non-locally available objects dependent on the selected object are retrieved. If the answer is YES, the process passes to block 45 and shows the new object on the display (13).

If the answer is NO, the process passes to block 44, where the hourglass object dependent on the selected object is deleted from the tree in RAM (11).

Referring now to block 45, all the objects are shown on the display (13).

Referring now to figure 4b, at step 46 the address of the memory representation of the selected object in the tree is passed back, and the program determines the address of said object in the tree in RAM (11).

The process passes to block 47, where the program locates the first hourglass object dependent on the selected object.

Referring now to block 48, said hourglass object is transformed in the actual object associated to the dependent object retrieved.

At block 49, all the objects are shown on the display (13).

This process continues until all data have been retrieved and there are no hourglass icons remaining on the display.

This process is completely recursive without limitation in the number of hierarchy levels. All messages are completely asynchronous and the other objects locally available can be accessed meanwhile the above flow is running.

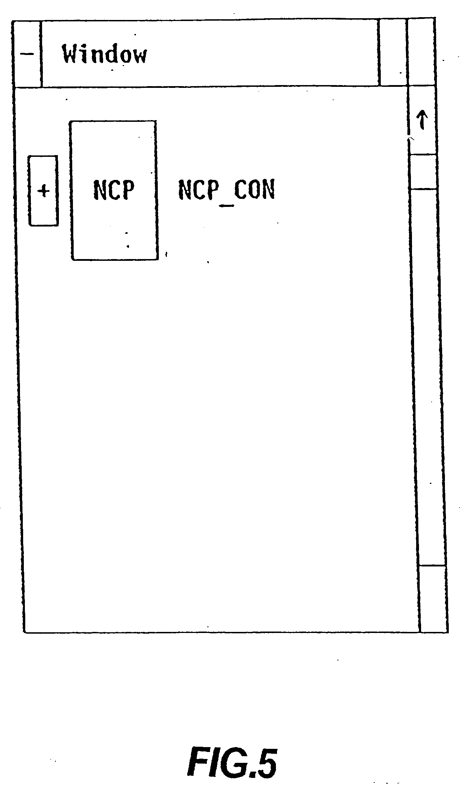

Figure 5 is a pictorial representation of the display (13) at a start time, when an object (named NCP_CON) is locally available in the tree in RAM (11) and shown in a window.

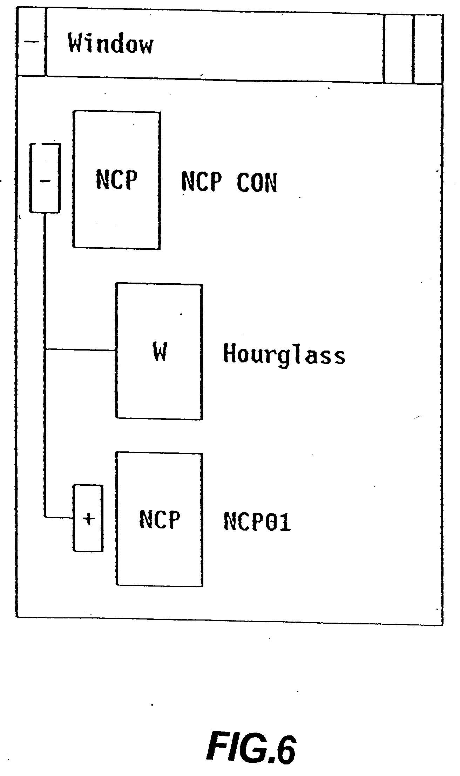

Figure 6 shows an intermediate state on the display (13), when the user expands the object NCP_CON, by clicking on the expand button with the mouse (15). If some dependent objects are locally available and others are to be retrieved from the external unit (16), the locally available objects (NCP01) are shown in the window, while a hourglass object is created and shown on the display (13).

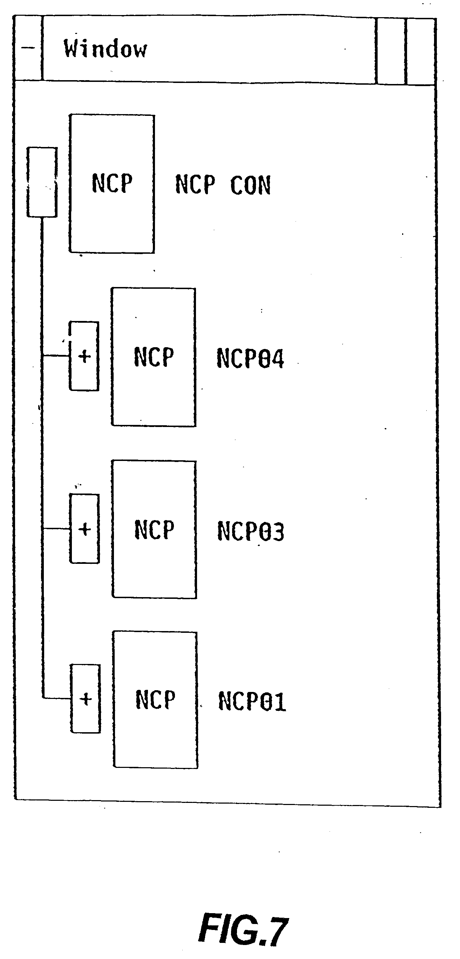

Figure 7 is a pictorial representation of the display (13) at the end state, when all data have been retrieved from the external unit (16) and the actual objects (NCP03 and NCP04) are substituted for the hourglass in the window on the display (13).

## Claims

1. A method for controlling the access to objects in an object oriented data processing application, capable of exchanging data with an external unit, said objects being hierarchically structured and each one of said objects being either locally available or retrievable from an external unit, said method comprising the steps of:
associating to each object a counter indicating whether there are objects dependent on said object,
associating a dummy dependent object to each locally available object with at least one dependent object and with at least one non-locally available dependent object,
selecting an object,
making available for each command involving any object dependent on a selected object the locally available objects dependent on said object and locking the access to the objects dependent on said object which are to be retrieved from the external unit,
unlocking the access to a object dependent on said selected object when all information related to said dependent object has been retrieved from the external unit.

2. The method for controlling the access to objects in an object oriented data processing application according to Claim 1, further including the step of:
removing the dummy object associated to a selected object when all the non-locally available objects dependent on said selected object have been retrieved from the external unit.

3. The method for controlling the access to objects in an object oriented data processing application according to Claim 1 or 2, further including the steps of:
associating to each locally available object a related graphic symbol and displaying said symbol,
associating to the dummy object associated to said selected object a graphic symbol indicating the non-local availability of at least one object dependent on said selected object and displaying said symbol,
associating to each non-locally available object dependent on said selected object the related graphic symbol when all information related to said dependent object has been retrieved from the external unit and displaying said symbol,
deleting said graphic symbol indicating the non-local availability of at least one object dependent on said selected object when all the non-locally available objects dependent on said selected object have been retrieved from the external unit.

4. The method for controlling the access to objects in an object oriented data processing application according to any previous claim, further including the step of:
associating to each object a counter indicating the number of objects dependent on said object.

5. The method for controlling the access to objects in an object oriented data processing application according to Claim 4, further including the steps of:
associating to each locally available object a related graphic symbol and displaying said symbol,
associating to each non-locally available object dependent on said selected object a graphic symbol indicating the non-local availability of said dependent object and displaying said symbol,
replacing said symbol indicating the non-local availability of a said dependent object with the graphic symbol related to said dependent object when all data related to said dependent object have been retrieved from the external unit and displaying said related symbol.

6. A data processing system for controlling the access to objects in an object oriented data processing application, capable of exchanging data with an external unit, said objects being hierarchically structured and each one of said objects being either locally available or retrievable from an external unit, said system comprising:
means for associating to each object a counter indicating whether there are objects dependent on said object,
means for associating a dummy dependent object to each locally available object with at least one dependent object and with at least one non-locally available dependent object,
means for selecting an object,
means for making available for each command involving any object dependent on a selected object the locally available objects dependent on said object and locking the access to the objects dependent on said object which are to be retrieved from the external unit,
means for unlocking the access to a object dependent on said selected object when all information related to said dependent object has been retrieved from the external unit.

7. The data processing system for controlling the access to objects in an object oriented data processing application according to Claim 6, further including:
means for removing the dummy object associated to a selected object when all the non-locally available objects dependent on said selected object have been retrieved from the external unit.

8. The data processing system for controlling the access to objects in an object oriented data processing application according to Claim 6 or 7, further including:
means for associating to each locally available object a related graphic symbol and displaying said symbol,
means for associating to the dummy object associated to said selected object a graphic symbol indicating the non-local availability of at least one object dependent on said selected object and displaying said symbol,
means for associating to each non-locally available object dependent on said selected object the related graphic symbol when all information related to said dependent object has been retrieved from the external unit and displaying said symbol,
means for deleting said graphic symbol indicating the non-local availability of at least one object dependent on said selected object when all the non-locally available objects dependent on said selected object have been retrieved from the external unit.

9. The data processing system for controlling the access to objects in an object oriented data processing application according to any claim from 6 to 8, further including:
means for associating to each object a counter indicating the number of objects dependent on said object.

10. The data processing system for controlling the access to objects in an object oriented data processing application according to Claim 9, further including:
means for associating to each locally available object a related graphic symbol and displaying said symbol,
means for associating to each non-locally available object dependent on said selected object a graphic symbol indicating the non-local availability of said dependent object and displaying said symbol,
means for replacing said symbol indicating the non-local availability of a said dependent object with the graphic symbol related to said dependent object when all data related to said dependent object have been retrieved from the external unit and displaying said related symbol.
